# EUROPEAN PATENT SPECIFICATION

(11) **EP 1 796 293 B1**
(45) Date of publication and mention of the grant of the patent: **12.09.2012**
(21) Application number: 06014295.7
(22) Date of filing: 10.07.2006
(51) Int. Cl.: H04W 52/02, H04B 7/26

(54) **System and method providing power-save operation in a multimode communication device**
System und Verfahren zur Bereitstellung von Energiesparbetrieb bei einer multimoden Kommunikationsvorrichtung
Système et procédé fournissant une opération d'économie d'énergie dans un dispositif de communication multimode

(30) Priority: 07.12.2005 US 298371; 07.12.2005 US 297881; 07.12.2005 US 299230; 21.12.2005 US 752749 P; 15.03.2006 US 376647
(43) Date of publication of application: 13.06.2007
(73) Proprietor: Broadcom Corporation, Irvine, CA 92617 (US)
(72) Inventor: Behzad, Arya, CA 92064 (US); Rofougaran, Ahmadreza, Newport Coast, CA 92657 (US)
(74) Representative: Jehle, Volker Armin

(56) References cited:
- EP-A1- 1 578 095
- WO-A1-02/03733
- WO-A2-2004/110073
- GB-A- 2 403 098
- US-A1- 2004 185 857
- US-A1- 2005 020 298
- US-A1- 2005 085 182

## Description

### [CROSS-REFERENCE TO RELATED APPLICATIONS]

This patent application is related to and claims priority from provisional patent application serial number 60/752,749 filed December 21, 2005, entitled "SYSTEM AND METHOD PROVIDING POWER-SAVE OPERATION IN A MULTIMODE COMMUNICATION DEVICE,". Also, is it referred to United States patent application serial number 11/298,371, filed December 7, 2005, entitled "MULTIMODE COMMUNICATION DEVICE WITH SHARED SIGNAL PATH PROGRAMMABLE FILTER," with attorney docket number 16887US02, United States patent application serial number 11/297,881, filed December 7, 2005, filed December 7, 2005, entitled "MOBILE COMMUNICATION DEVICE WITH LOW POWER SIGNAL DETECTOR," with attorney docket number 16676US02, and United States patent application serial number 11/299,230, filed December 7, 2005, entitled "MOBILE COMMUNICATION DEVICE WITH LOW POWER RECEIVER FOR SIGNAL DETECTION," with attorney docket number 16867US02.

### [FEDERALLY SPONSORED RESEARCH OR DEVELOPMENT]

[Not Applicable]

### [SEQUENCE LISTING]

[Not Applicable]

### [MICROFICHE/COPYRIGHT REFERENCE]

[Not Applicable]

### BACKGROUND OF THE INVENTION

Communication devices (e.g., mobile communication devices) are continually increasing in popularity. Such communication devices include, for example and without limitation, cellular phones, paging devices, portable email devices, and personal digital assistants. Mobile communication devices, for example, provide the user with the capability to conduct communications while moving through a variety of environments.

Communication devices may operate in accordance with multiple communication modes. For example a mobile wireless communication device may be adapted to operate in a cellular communication mode and a wireless computer network communication mode. Such multimode communication devices may, for example, utilize respective radio configurations for each communication mode. For example, various communication modes may correspond to different respective radios and/or different communication protocols. Also for example, various communication modes may correspond to different respective electronic components and/or different configurations.
US 2005/020298 A1 discloses a radio communication apparatus including a first transmission and reception section that executes process of receiving and transmitting a signal with a first frequency band, a second transmission and reception section that executes process of receiving and transmitting a signal with a second frequency band, and a control circuit that sets, in an operation mode, one of the respective transmission and reception sections which uses a frequency band with which a signal is transmitted and received, while setting the other transmission and reception sections in a stop mode.
WO 2004/110073 A2 discloses a method for reducing the power usage of a mobile terminal, whereby at least one mobile radio module is at least partly activated, according to the position of the mobile terminal and a radio cell map.
US 2005/085182 A1 discloses a radio communication terminal, comprising first means for transmitting/receiving RF signals to communicate in a cellular radio communication network, said first means being in standby mode when no communication is set up in the cellular network with another terminal or with the network itself. The terminal comprises second means for receiving at least one carrier dedicated to collective data of multimedia contents, said second means being activated only when the first means are in standby mode.

Further limitations and disadvantages of conventional and traditional approaches will become apparent to one of skill in the art, through comparison of such systems with the present invention as set forth in the remainder of the present application with reference to the drawings.

### BRIEF SUMMARY OF THE INVENTION

Various aspects of the present invention provide a system and method providing power-save operation in a multimode communication device, substantially as shown in and/or described in connection with at least one of the figures, as set forth more completely in the claims.

The invention is defined by the appended claims.

According to an example, a method for operating a multimode communication device is provided, the method comprising:
determining to communicate in a first communication mode and not in a second communication mode; and
in response to determining to communicate in the first communication mode and not in the second communication mode:
   placing a first set of components in a normal operational state, where the first set of components is associated with communicating in the first communication mode;
   placing a second set of components in a power-save state, where the second set of components is associated with communicating in the second communication mode and not associated with communicating in the first communication mode; and
   communicating in the first communication mode utilizing at least the first set of components.

Advantageously, the method further comprises:
while communicating in the first communication mode, determining to communicate in the second communication mode and not in the first communication mode; and
in response to determining to communicate in the second communication mode and not in the first communication mode:
   placing the second set of components in a normal operational state;
   placing at least a portion of the first set of components in a power-save state; and
   communicating in the second communication mode utilizing at least the second set of components.
   Advantageously, the method further comprises, in response to determining to communicate in the first communication mode and not in the second communication mode, placing a third set of components in a normal operational state, where the third set of components is associated with communicating in at least the first communication mode and the second communication mode.
   Advantageously, determining to communicate in a first communication mode and not in a second communication mode comprises:
   receiving a user input; and
   determining to communicate in the first communication mode and not in the second communication mode based, at least in part, on the user input.
   Advantageously, determining to communicate in a first communication mode and not in a second communication mode comprises:
   receiving a signal from another communication system; and
   determining to communicate in the first communication mode and not in the second communication mode based, at least in part, on the received signal.
   Advantageously, determining to communicate in a first communication mode and not in a second communication mode comprises determining to communicate in a first communication mode and not in a second communication mode based, at least in part, on a transmission time schedule.
   Advantageously, determining to communicate in a first communication mode and not in a second communication mode comprises:
   detecting a real-time communication condition; and
   determining to communicate in a first communication mode and not in a second communication mode based, at least in part, on the detected real-time communication condition.
   Advantageously:
   the first set of components comprises radio components associated with communicating in at least the first communication mode; and
   the second set of components comprises radio components associated with communicating in at least the second communication mode.
   Advantageously:
   the first set of components comprises frequency-generating circuitry associated with communicating in at least the first communication mode; and
   the second set of components comprises frequency-generating circuitry associated with communicating in at least the second communication mode.
   Advantageously:
   the first set of components comprises signal-mixing circuitry associated with communicating in at least the first communication mode; and
   the second set of components comprises signal-mixing circuitry associated with communicating in at least the second communication mode.
   Advantageously:
   the first set of components comprises filter circuitry associated with communicating in at least the first communication mode; and
   the second set of components comprises filter circuitry associated with communicating in at least the second communication mode.
   Advantageously:
   the first set of components comprises memory circuitry associated with communicating in at least the first communication mode; and
   the second set of components comprises memory circuitry associated with communicating in at least the second communication mode.
   Advantageously:
   the first set of components comprises signal-processing circuitry associated with communicating in at least the first communication mode; and
   the second set of components comprises signal-processing circuitry associated with communicating in at least the second communication mode.

Advantageously:
the first set of components comprises amplifier circuitry associated with communicating in at least the first communication mode; and
the second set of components comprises amplifier circuitry associated with communicating in at least the second communication mode.

Advantageously:
the first set of components comprises analog-to-digital circuitry associated with communicating in at least the first communication mode; and
the second set of components comprises analog-to-digital circuitry associated with communicating in at least the second communication mode.

Advantageously:
the first set of components comprises power supply circuitry associated with communicating in at least the first communication mode; and
the second set of components comprises power supply circuitry associated with communicating in at least the second communication mode.

Advantageously:
the first set of components comprises user interface circuitry associated with communicating in at least the first communication mode; and
the second set of components comprises user interface circuitry associated with communicating in at least the second communication mode.

According to an example, a multimode communication device is provided comprising:
a first set of components adapted for communication in at least a first communication mode and not in a second communication mode;
a second set of components adapted for communication in at least the second communication mode and not in the first communication mode; and
at least one module adapted to:
   determine to communicate in the first communication mode and not in the second communication mode; and
in response to determining to communicate in the first communication mode and not in the second communication mode:
   place the first set of components in a normal operational state;
   place the second set of components in a power-save state; and
   communicate in the first communication mode utilizing at least the first set of components.

Advantageously, the at least one module is further adapted to:
while communicating in the first communication mode, determine to communicate in the second communication mode and not in the first communication mode; and
in response to determining to communicate in the second communication mode and not in the first communication mode:
   place the second set of components in a normal operational state;
   place at least a portion of the first set of components in a power-save state; and
   communicate in the second communication mode utilizing at least the second set of components.

Advantageously, the multimode communication device further comprises a third set of components adapted for communication in at least the first communication mode and the second communication mode, and wherein the at least one module is further adapted to, in response to determining to communicate in the first communication mode and not in the second communication mode, place the third set of components in a normal operational state.

Advantageously, the at least one module is adapted to determine to communicate in a first communication mode and not in a second communication mode based, at least in part, on a transmission time schedule.

Advantageously, the at least one module is adapted to determine to communicate in a first communication mode and not in a second communication mode based, at least in part, on a detected real-time communication condition.

Advantageously:
the first set of components comprises radio components adapted for communicating in at least the first communication mode; and
the second set of components comprises radio components adapted for communicating in at least the second communication mode.

Advantageously:
the first set of components comprises frequency-generating circuitry adapted for communicating in at least the first communication mode; and
the second set of components comprises frequency-generating circuitry adapted for communicating in at least the second communication mode.

Advantageously:
the first set of components comprises signal-mixing circuitry adapted for communicating in at least the first communication mode; and
the second set of components comprises signal-mixing circuitry adapted for communicating in at least the second communication mode.

Advantageously:
the first set of components comprises filter circuitry adapted for communicating in at least the first communication mode; and
the second set of components comprises filter circuitry adapted for communicating in at least the second communication mode.

Advantageously:
the first set of components comprises memory circuitry adapted for communicating in at least the first communication mode; and
the second set of components comprises memory circuitry adapted for communicating in at least the second communication mode.

Advantageously:
the first set of components comprises amplifier circuitry adapted for communicating in at least the first communication mode; and
the second set of components comprises amplifier circuitry adapted for communicating in at least the second communication mode.
   Advantageously:
   the first set of components comprises analog-to-digital circuitry adapted for communicating in at least the first communication mode; and
   the second set of components comprises analog-to-digital circuitry adapted for communicating in at least the second communication mode.
   Advantageously:
   the first set of components comprises power supply circuitry adapted for communicating in at least the first communication mode; and
   the second set of components comprises power supply circuitry adapted for communicating in at least the second communication mode.
   These and other advantages, aspects and novel features of the present invention, as well as details of illustrative aspects thereof, will be more fully understood from the following description and drawings.

### BRIEF DESCRIPTION OF SEVERAL VIEWS OF THE DRAWINGS

Figure 1 is a diagram showing a first non-limiting exemplary method for providing power-save operation in a multimode communication device, in accordance with various aspects of the present invention.

Figure 2 is a diagram showing a second non-limiting exemplary method for providing power-save operation in a multimode communication device, in accordance with various aspects of the present invention.

Figure 3 is a diagram showing a third non-limiting exemplary method for providing power-save operation in a multimode communication device, in accordance with various aspects of the present invention.

Figure 4 is a diagram showing a fourth non-limiting exemplary method for providing power-save operation in a multimode communication device, in accordance with various aspects of the present invention.

Figure 5 is a diagram showing a portion of a first exemplary multimode communication device, in accordance with various aspects of the present invention.

Figure 6 is a diagram showing a portion of a second exemplary multimode communication device, in accordance with various aspects of the present invention.

Figure 7 is a diagram showing a portion of a third exemplary multimode communication device, in accordance with various aspects of the present invention.

Figure 8 is a diagram showing a portion of a fourth exemplary multimode communication device, in accordance with various aspects of the present invention.

Figure 9 is a diagram showing a portion of a fifth exemplary multimode communication device, in accordance with various aspects of the present invention.

Figure 10 is a diagram showing a portion of a sixth exemplary multimode communication device, in accordance with various aspects of the present invention.

### DETAILED DESCRIPTION OF THE INVENTION

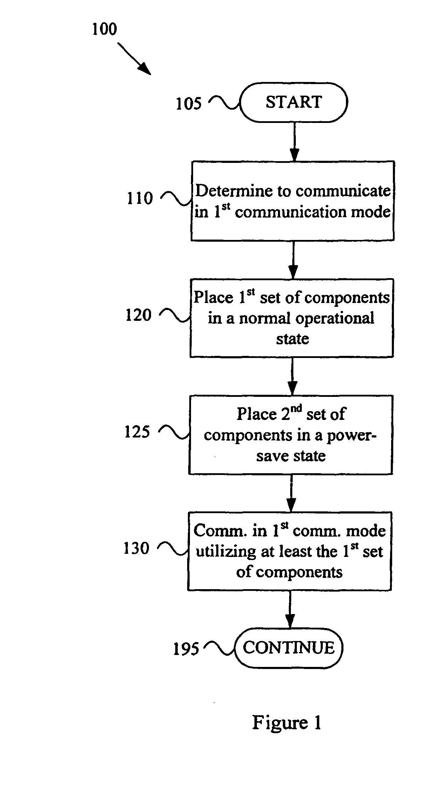

Figure 1 is a diagram showing a first non-limiting exemplary method 100 for providing power-save operation in a multimode communication device, in accordance with various aspects of the present invention. A multimode communication device (or system) implementing the method 100 may comprise characteristics of any of a variety of communication systems/devices (e.g., multimode wireless communication devices). For example and without limitation, the communication system may comprise characteristics of any of a variety of mobile wireless communication devices (e.g., cellular phones, paging devices, portable email devices, etc.). Also for example, the communication system may comprise characteristics of fixed communication systems or devices (e.g., network access points, base stations, satellites, wireless routers, set top boxes, etc.). Further for example, the communication system may comprise characteristics of a variety of electronic devices with wireless communication capability (e.g., televisions, music players, cameras, remote controls, personal digital assistants, handheld computers, gaming devices, etc.). Accordingly, the scope of various aspects of the present invention should not be limited by characteristics of particular communication systems or devices.

The following discussion will, at times, refer to various communication modes. A multimode communication device may, for example, be adapted to communicate in a plurality of such communication modes. For the following discussion, a communication mode may generally be considered to coincide with communication utilizing a particular communication protocol or standard. A non-limiting list of exemplary communication protocols includes various cellular communication protocols (e.g., GSM, GPRS, EDGE, CDMA, WCDMA, TDMA, PDC, etc.), various wireless networking protocols or standards, including WLAN, WMAN, WPAN and WWAN (e.g., IEEE 802.11, Bluetooth, IEEE 802.15, UWB, IEEE 802.16, IEEE 802.20, Zigbee, any WiFi protocol, etc.), various television communication standards, etc. The scope of various aspects of the present invention should not be limited by characteristics of particular communication modes or protocols, whether standard or proprietary.

The following discussion will also, at times, refer to various electrical components or sets of components. A component may, for example, comprise characteristics of a discrete passive or active electrical device (or portion thereof). A component may also, for example, comprise characteristics of an integrated circuit or a portion thereof. A set of components may thus, for example, comprise one or more of such components. For example, a set of components may comprise one or more discrete electrical components (or portions thereof). Also for example, a set of components may comprise one or more integrated circuits or portions of an integrated circuit. Accordingly, the scope of various aspects of the present invention should not be limited by characteristics of any particular electrical device, portion of an electrical device, or combination of electrical devices.

For illustrative clarity, the following discussion will generally exemplify various aspects of the present invention by discussing a first communication mode and a second communication mode. Such an illustrative mechanism is not, however, to be construed as limiting the scope of various aspects of the present invention to two-communication-mode scenarios. For example, various aspects of the present invention are readily extensible to multimode communication devices adapted to communicate in more than two communication modes.

The exemplary method 100 may begin executing at step 105. The exemplary method 100 (and all methods discussed herein) may begin executing for any of a variety of reasons. For example and without limitation, the exemplary method 100 may begin executing in response to a user input, a power-up condition or a reset condition. Also for example, the exemplary method 100 may begin executing in response to a detected event (e.g., a timer expiration, detected signal, detected network access point, system command, etc.). Further for example, the exemplary method 100 may begin executing in response to a determination to communicate in one or more of a plurality of communication modes. Accordingly, the scope of various aspects of the present invention should not be limited by characteristics of any particular initiating cause or condition.

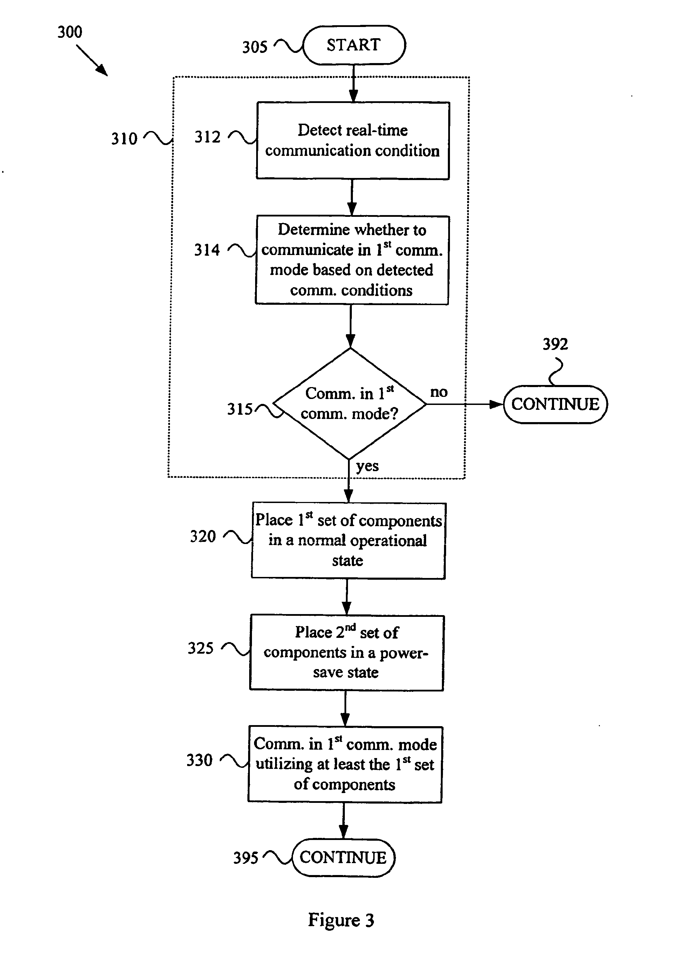

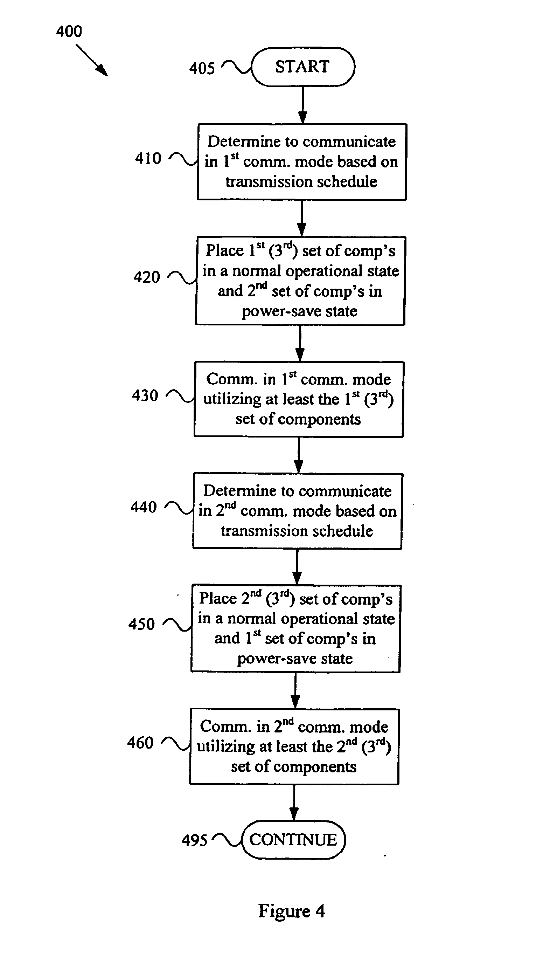

The exemplary method 100 may, at step 110, comprise determining to communicate with the multimode communication device in a first communication mode and not in a second communication mode. Step 110 may comprise performing such a determination in any of a variety of manners. For example and without limitation, as will be exemplified in the discussion of Figure 3, step 110 may comprise making such a determination based, at least in part, on detected communication conditions. Also for example, as will be exemplified in the discussion of Figure 4, step 110 may comprise making such a determination based, at least in part, on predetermined communication time allocation (e.g., transmission and/or reception time allocation).

Step 110 may, for example, comprise determining whether to communicate in the first communication mode in response to a user input, predetermined communication (e.g., transmission) time allocation, detected real-time communication conditions, etc. In a non-limiting exemplary scenario, step 110 may comprise receiving or otherwise detecting a signal associated with the first communication mode (e.g., utilizing low-power or normal signal detection/analysis circuitry).

Note that in various non-limiting exemplary scenarios where the communication system implementing the exemplary method 100 is only capable of communicating in one communication mode at a time, determining to communicate with the multimode communication device in a first communication mode might always coincide with determining not to communicate with the multimode communication device in a second communication mode. In other various non-limiting exemplary scenarios, where the communication system is capable of communicating in a plurality of communication modes concurrently, the determination to communicate with the multimode communication device in a first communication mode might be independent of (or only partially dependent on) the determination to not communicate with the multimode communication device for communicating in a second communication mode.

The exemplary method 100 may, at step 120, comprise (e.g., in response to determining to communicate with the multimode communication device in the first communication mode and not in the second communication mode at step 110) placing a first set of components in a normal operational state, where the first set of components is associated with the multimode communication device communicating in the first communication mode. That is, the multimode communication device may utilize the first set of components to communicate in the first communication mode.

Placing an electrical/electronic component in a normal operational state may, for example and without limitation, comprise providing a normal or typical amount of electrical power to the component or otherwise providing electrical power having normal or typical characteristics. Placing an electronic component in a normal operational state may also, for example, comprise providing a clocking signal at a normal or typical frequency to the component. Further for example, placing an electronic component in a normal operational state may comprise removing a reset signal being applied to the component or otherwise removing the electronic component from a reset state. The scope of various aspects of the present invention should not be limited by characteristics of any particular manner of placing (or operating) a component in a normal operational state.

As will be explained in more detail in the discussion of Figure 4, the first set of components might comprise components that are utilized for communication in a plurality of communication modes, one of which is the first communication mode. In such an exemplary scenario, step 120 may comprise placing such components in a normal operational state.

The exemplary method 100 may, at step 125, comprise placing a second set of components in a power-save state, where the second set of components is associated with communicating in a second communication mode and not associated with communicating in the first communication mode. That is, the multimode communication device might utilize the second set of components to communicate in the second communication mode but not to communicate in the first communication mode.

Step 125 may comprise placing an electrical/electronic component in a power-save state (e.g., a sleep state) in any of a variety of manners. For example and without limitation, step 125 may comprise placing a component in a power-save state by reducing or eliminating the supply of electrical power to the component or otherwise modifying characteristics of electrical power provided to the component. Also for example, step 125 may comprise communicating a reset (or sleep) signal to the component. Further for example, step 125 may comprise reducing the frequency of, or eliminating, a clock signal provided to the component. The scope of various aspects of the present invention should not be limited by characteristics of any particular manner of placing (or operating) a component in a power-save state.

The first and second sets of components might comprise characteristics of any of a variety of electrical/electronic components. Various non-limiting examples of such components will now be presented by way of non-limiting example.

For example, the first set of components may comprise MAC layer circuitry associated with (e.g., utilized for) communicating in at least the first communication mode, and the second set of components may comprise MAC layer circuitry associated with (e.g., utilized for) communicating in at least the second communication mode. Such MAC layer circuitry may, for example, comprise characteristics of various processor circuitry adapted to manage media access and provide services to higher layers.

Also for example, the first set of components may comprise PHY layer circuitry associated with communicating in at least the first communication mode, and the second set of components may comprise PHY layer circuitry associated with communicating in at least the second communication mode. Such PHY layer circuitry may, for example, comprise characteristics of various wireless interface circuitry (e.g., RF radio circuitry, optical circuitry, etc.) or other circuitry adapted to communicate information at the physical layer or provide services to higher layers.

For example, the first set of components may comprise frequency-generating circuitry associated with communicating in the first communication mode, and the second set of components may comprise frequency-generating circuitry associated with communicating in the second communication mode. Such frequency-generating circuitry may, for example, comprise characteristics of oscillator circuitry, frequency or phase lock loop circuitry, etc. Also for example, the first set of components may comprise signal-mixing circuitry associated with communicating in at least the first communication mode, and the second set of components comprises signal-mixing circuitry associated with communicating in at least the second communication mode. Such signal-mixing circuitry may, for example, comprise characteristics of RF and/or IF mixers.

As another example, the first set of components may comprise modulation circuitry associated with communicating in the first communication mode, and the second set of components may comprise modulation circuitry associated with communicating in the second communication mode. Such modulation circuitry may, for example, comprise characteristics of any of a variety of types of modulation circuitry (e.g., phase modulation circuitry, frequency modulation circuitry, amplitude modulation circuitry, etc.).

Further for example, the first set of components may comprise filter circuitry associated with communicating in the first communication mode, and the second set of components may comprise filter circuitry associated with communicating in the second communication mode. Such filter circuitry may, for example, comprise characteristics of analog and/or digital filter circuitry. Additionally for example, the first set of components may comprise memory circuitry associated with communicating in the first communication mode, and the second set of components may comprise memory circuitry associated with communicating in the second communication mode. Such memory circuitry may, for example, comprise characteristics of any of a variety of volatile and/or non-volatile memory.

Still further for example, the first set of components may comprise signal processing circuitry associated with communicating in the first communication mode, and the second set of components may comprise signal processing circuitry associated with communicating in the second communication mode. Such signal processing circuitry may, for example, comprise characteristics of digital signal processors, microprocessors, microcontrollers, etc. Additionally for example, the first set of components may comprise amplifier circuitry associated with communicating in the first communication mode, and the second set of components may comprise amplifier circuitry associated with communicating in the second communication mode. Such amplifier circuitry may, for example and without limitation, comprise characteristics of any of a variety of amplifier circuits (e.g., low-noise amplifier circuitry, power amplifier circuitry, etc.).

Yet further for example, the first set of components may comprise analog-to-digital ("A/D") circuitry (or digital-to-analog circuitry) associated with communicating in the first communication mode, and the second set of components may comprise A/D circuitry associated with communicating in the second communication mode. Such A/D circuitry may, for example, comprise characteristics of sigma-delta modulators or any of a variety of A/D circuitry types.

Additionally for example, the first set of components may comprise power supply circuitry associated with communicating in the first communication mode, and the second set of components may comprise power supply circuitry associated with communicating in the second communication mode. Such power supply circuitry may, for example, comprise characteristics of any of a variety of types of power supply circuitry. As a non-limiting example, the first communication mode and second communication mode may each utilize different types of electrical power (e.g., characterized by different respective voltages, wattages, currents, ripple levels, load response times, etc.).

Further for example, the first set of components may comprise encoding and/or decoding circuitry associated with communicating in the first communication mode, and the second set of components may comprise encoding and/or decoding circuitry associated with communicating in the second communication mode. Such encoding and/or decoding circuitry may, for example, comprise characteristics of any of a variety of encoders/decoders (e.g., encoders/decoders for audio, video, error correction, error detection, etc.). As a non-limiting example, the first communication mode might utilize audio and video encoders/decoders, and the second communication mode might utilize only audio encoders/decoders.

Still further for example, the first set of components may comprise secure communication components associated with communicating in the first communication mode, and the second set of components may comprise secure communication components associated with communicating in the second communication mode. Such secure communication components may, for example, comprise characteristics of any of a variety of secure communication components (e.g., secure access components, encryption/decryption components, etc.). As a non-limiting example, the first communication mode may utilize a particular first type of encryption with associated components, and the second communication mode may utilize a particular second type of encryption with associated components.

Also for example, the first set of components may comprise user interface ("U/I") circuitry associated with communicating in the first communication mode, and the second set of components may comprise U/I circuitry associated with communicating in the second communication mode. Such U/I circuitry may, for example, comprise characteristics of display circuitry, camera circuitry, audio input or output circuitry, key press circuitry, touchpad circuitry, touch screen circuitry, etc.

In general, step 120 may comprise placing a first set of components in a normal operational state, where the first set of components is associated with communicating in the first communication mode, and step 125 may comprise placing a second set of components in a power-save state, where the second set of components is associated with communicating in a second communication mode and not associated with communicating in the first communication mode. Accordingly, the scope of various aspects of the present invention should not be limited by characteristics of particular components or particular manners of placing such components in a normal operational state or power-save state.

The exemplary method 100 may, at step 130, comprise communicating in the first communication mode utilizing at least the first set of components (e.g., as placed in a normal operational state at step 120). Step 130 may comprise communicating in the first communication mode in any of a variety of manners in accordance with the first communication mode (or associated communication protocol). For example and without limitation, step 130 may comprise utilizing the first set of components in addition to other components that are shared between the first communication mode and other communication modes.

The exemplary method 100 may at step 195, comprise performing any of a large variety of continued processing. Such continued processing may, for example and without limitation, comprise conducting further communication in the first communication mode, preparing for and communicating in another communication mode, etc. Such continued processing may, for example and without limitation, comprise performing various user interface activities associated with communicating in the first communication mode. Also for example, such continued processing may comprise directing execution flow of the exemplary method 100 back to a previous step (e.g., step 110).

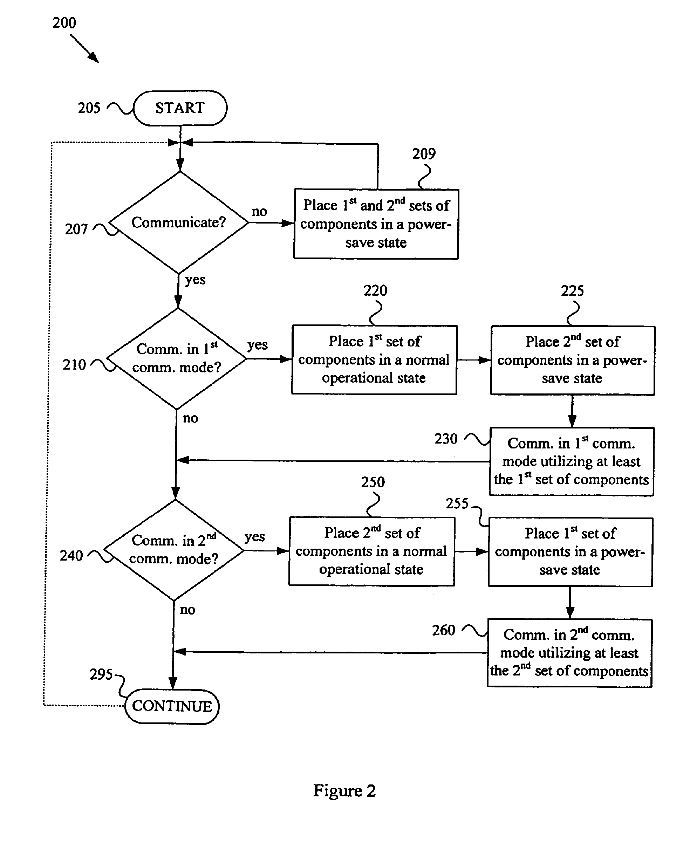

Figure 2 is a diagram showing a second non-limiting exemplary method 200 for providing power-save operation in a multimode communication device, in accordance with various aspects of the present invention. The exemplary method 200 may, for example and without limitation, share any or all characteristics with the exemplary method 100 illustrated in Figure 1 and discussed previously.

The exemplary method 200 may, at step 207, comprise determining whether to communicate (e.g., in any communication mode). Step 207 may comprise making such a determination in any of a variety of manners. For example, step 207 may comprise determining whether to communicate in response to a user input, predetermined communication (e.g., transmission) time allocation, detected real-time communication conditions, etc. In a non-limiting exemplary scenario, step 207 may comprise receiving or otherwise detecting a signal associated with one of a plurality of communication modes in which the multimode communication device is capable of communicating (e.g., utilizing low-power or normal signal detection/analysis circuitry).

If it is determined not to communicate, then step 207 may comprise directing execution flow of the exemplary method 200 to step 209. If, however, it is determined to communicate, then step 207 may comprise directing execution flow of the exemplary method 200 to step 210.

The exemplary method 200 may, at step 209, comprise placing first and second sets of communication components in a power-save state. For example, the first set of components might be associated with a first communication mode, and the second set of components might be associated with a second communication mode. Step 209 may, for example, share any or all characteristics with step 125 of the exemplary method 100 of Figure 1, albeit with regard to both first and second sets of components.

The exemplary method 200 may, at step 210, comprise determining whether to communicate with the multimode communication device in a first communication mode (e.g., and not communicate in a second communication mode). Step 210 may comprise making such a determination in any of a variety of manners. For example and without limitation, step 210 may share any or all characteristics with step 110 of the exemplary method 100.

If step 210 comprises determining to communicate in the first communication mode, then step 210 may comprise directing execution flow of the exemplary method 200 to step 220. If, however, step 210 comprises determining to not communicate in the first communication mode, then step 210 may comprise directing execution flow of the exemplary method 200 to step 240.

The exemplary method 200 may, at step 220, comprise (e.g., in response to determining to communicate with the multimode communication device in the first communication mode and not in the second communication mode) placing a first set of components in a normal operational state, where the first set of components is associated with the multimode communication device communicating in the first communication mode.

The exemplary method 200 may, at step 225, comprise placing a second set of components in a power-save state, where the second set of components is associated with communicating in a second communication mode and not associated with communicating in the first communication mode.

The exemplary method 200 may, at step 230, comprise communicating in the first communication mode utilizing at least the first set of components (e.g., as placed in a normal operational state at step 220).

Steps 220-230 may, for example and without limitation, share any or all characteristics with steps 120-130 of the exemplary method 100 illustrated in Figure 1 and discussed previously.

The exemplary method 200 may, at step 240, comprise determining whether to communicate in the second communication mode (e.g., and not communicate in the first communication mode). Step 240 may comprise making such a determination in any of a variety of manners.

If step 240 comprises determining to communicate in the second communication mode, then step 240 may comprise directing execution flow of the exemplary method 200 to step 250. If, however, step 240 comprises determining to not communicate in the second communication mode, then step 240 may comprise directing execution flow of the exemplary method 200 to step 295.

The exemplary method 200 may, at step 250, comprise (e.g., in response to determining to utilize the multimode communication device for communicating in the second communication mode and not in the first communication mode) placing the second set of components in a normal operational state (e.g., the second set of components associated with the multimode communication device communicating in the second communication mode).

The exemplary method 200 may, at step 255, comprise placing at least a portion of the first set of components in a power-save state (e.g., at least a portion of the first set of components associated with communicating in the first communication mode and not associated with communicating in the second communication mode).

The exemplary method 200 may, at step 260, comprise communicating in the second communication mode utilizing at least the second set of components (e.g., as placed in a normal operational state at step 250).

Steps 240-260 may, for example and without limitation, share any or all characteristics with steps 210-230, albeit with regard to the second communication mode and second set of components rather than the first communication mode and first set of components.

As mentioned previously in the discussion of step 110 of Figure 1, the determination to communicate in the first communication mode (and, by analogy, the second communication mode) may be based, at least in part, on detected communication conditions. Figure 3 will now be presented as a non-limiting example of making such a determination.

Figure 3 is a diagram showing a third non-limiting exemplary method 300 for providing power-save operation in a multimode communication device, in accordance with various aspects of the present invention. The exemplary method 300 may, for example and without limitation, share any or all characteristics with the exemplary methods 100-200 illustrated in Figures 1-2 and discussed previously.

The exemplary method 300 may, at step 310, comprise determining to communicate with the multimode communication device in a first communication mode and not in a second communication mode. Step 310 may comprise performing such a determination in any of a variety of manners. For example and without limitation, step 310 may share any or all characteristics with steps 110, 210 and 240 discussed previously.

Step 310 may, for example at sub-step 312, comprise detecting a communication condition (e.g., detecting a real-time communication condition in real-time). A communication condition may be generally considered to be an event or communication environmental condition encountered during operation of the multimode communication device.

For example and without limitation, a communication condition may comprise characteristics of a user input (e.g., a user initiation of an outgoing communication or response to an incoming communication). Also for example, a communication condition may comprise characteristics of a signal received from another device (e.g., a peer device or communication network). Such a signal may, for example, comprise characteristics of a beacon signal, response to a beacon signal, a broadcast signal, unicast signal, multicast signal, etc.

Further for example, a communication condition may comprise characteristics of the general communication environment (e.g., associated with the first communication mode and/or other communication modes). Such characteristics may, for example, comprise noise conditions, data rate, quality of service, cost, etc. Additionally for example, a communication condition may comprise characteristics of communication system limitations (e.g., power supply and/or utilization, power output capability, communication mode capability, etc.).

Step 310 may then, for example at sub-step 314, comprise determining to utilize the multimode communication device for communicating in a first communication mode and not in a second communication mode based, at least in part, on the detected real-time communication condition. Sub-step 314 may comprise making such a determination in any of a variety of manners. For example and without limitation, step 314 may comprise analyzing one or more communication conditions (e.g., as detected at step 312) to determine whether the first communication mode is required for a particular communication. Also for example, step 314 may comprise analyzing one or more communication conditions (e.g., as detected at step 312) to determine whether the first communication mode is preferable to the second communication mode for a particular communication.

In a non-limiting exemplary scenario comprising detection/analysis of a signal received from another communication system, step 310 may comprise utilizing low-power circuitry to detect and/or analyze such a signal.

Step 310 may then, for example at sub-step 315, comprise directing execution flow of the exemplary method 300 in response to the determination made at step 314. For example, if sub-step 314 comprises determining not to communicate in the first communication mode, then sub-step 315 may comprise directing execution flow of the exemplary method 300 to a first continued processing step 392. Step 392 may, for example and without limitation, comprise determining whether to communicate in a second communication mode and performing such communication if desired. Further for example, if sub-step 314 comprises determining to communicate in the first communication mode, then sub-step 315 may comprise directing execution flow of the exemplary method 300 to step 320.

The exemplary method 300 may, at step 320, comprise (e.g., in response to determining to communicate with the multimode communication device in the first communication mode and not in the second communication mode at step 310) placing a first set of components in a normal operational state, where the first set of components is associated with the multimode communication device communicating in the first communication mode.

The exemplary method 300 may, at step 325, comprise placing a second set of components in a power-save state, where the second set of components is associated with communicating in a second communication mode and not associated with communicating in the first communication mode.

The exemplary method 300 may, at step 330, comprise communicating in the first communication mode utilizing at least the first set of components (e.g., as placed in a normal operational state at step 320).

The scope of various aspects of the present invention should not be limited by characteristics of a particular communication condition or of a particular manner of determining whether to communicate in the first communication mode based on such detected communication conditions.

Steps 320-330 may, for example and without limitation, share any or all characteristics with steps 120-130 and steps 220-230 of the exemplary methods 100-200 illustrated in Figures 1-2 and discussed previously.

As mentioned previously in the discussion of step 110 of Figure 1, the determination to communicate in the first communication mode (and, by analogy, the second communication mode) may be based, at least in part, on a predetermined communication time allocation (e.g., transmission and/or reception time allocation determined prior to beginning to communicate a current communication). Figure 4 will now be presented as a non-limiting example of making such a determination.

Figure 4 is a diagram showing a fourth non-limiting exemplary method 400 for providing power-save operation in a multimode communication device, in accordance with various aspects of the present invention. The exemplary method 400 may, for example and without limitation, share any or all characteristics with the exemplary methods 100-300 illustrated in Figures 1-3 and discussed previously.

The exemplary method 400 may, at step 410, comprise determining to communicate with the multimode communication device in a first communication mode and not in a second communication mode based, at least in part, on a communication time schedule (e.g., a transmission time schedule). Such a communication time schedule may comprise any of a variety of time schedule characteristics. For example and without limitation, the communication time schedule may comprise information detailing communication time windows allocated between a plurality of communication modes. The communication time schedule may, for example, be determined prior to beginning a current communication in the first communication mode and/or the second communication mode. The communication time schedule may also, for example, be re-determined or modified in response to real-time communication conditions.

The exemplary method 400 may, at step 420, comprise (e.g., in response to determining to utilize the multimode communication device for communicating in the first communication mode and not in the second communication mode at step 410) placing a first set of components in a normal operational state, where the first set of components is associated with the multimode communication device communicating in the first communication mode. Step 420 may also, for example, comprise placing a second set of components in a power-save state, where the second set of components is associated with communicating in a second communication mode and not associated with communicating in the first communication mode. Step 420 may additionally, for example, comprise placing a third set of components in a normal operational state, where the third set of components is associated with communicating in at least the first communication mode and the second communication mode. Step 420 may, for example and without limitation, share any or all characteristics with exemplary steps 120-125, 220-225 and 320-325 of the exemplary methods 100-300 illustrated in Figures 1-3 and discussed previously.

The exemplary method 400 may, at step 430, comprise communicating in the first communication mode utilizing at least the first and third sets of components (e.g., as placed in a normal operational state at step 420). Step 430 may, for example and without limitation, share any or all characteristics with steps 130, 230 and 330 of the exemplary methods 100-300 illustrated in Figures 1-3 and discussed previously.

The exemplary method 400 may, at step 440, comprise (e.g., while communicating in the first communication mode at step 430), determining to utilize the multimode communication device for communicating in the second communication mode and not in the first communication mode.

The exemplary method 400 may, at step 450, comprise (e.g., in response to determining to utilize the multimode communication device for communicating in the second communication mode and not in the first communication mode at step 440) placing a second set of components in a normal operational state, where the second set of components is associated with the multimode communication device communicating in the second communication mode. Step 450 may also, for example, comprise placing at least a portion of the first set of components (e.g., some or all of which were utilized at step 430), in a power-save state, where the at least a portion of the first set of components is associated with communicating in the first communication mode and not associated with communicating in the second communication mode. Step 450 may additionally, for example, comprise placing a third set of components in a normal operational state, where the third set of components is associated with communicating in at least the first communication mode and the second communication mode. Step 450 may, for example and without limitation, share any or all characteristics with exemplary step 420, albeit with respect to the second and third sets of components rather than the first and third sets of components.

The exemplary method 400 may, at step 460, comprise communicating in the second communication mode utilizing at least the second and third sets of components (e.g., as placed in a normal operational state at step 450). Step 460 may, for example and without limitation, share any or all characteristics with step 430, albeit with regard to the second communication mode rather than the first communication mode.

The exemplary methods 100-400 illustrated in Figures 1-4 and discussed previously were presented to provide non-limiting examples of various aspects of the present invention. Accordingly, the scope of various aspects of the present invention should not be limited by particular characteristics of the exemplary methods 100-400.

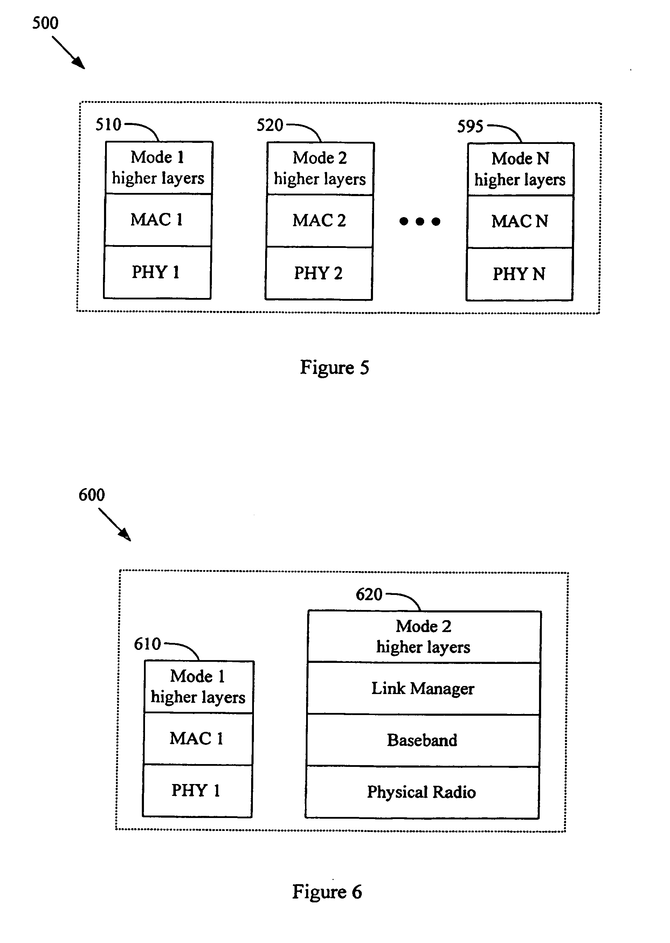

Figure 5 is a diagram showing a portion of a first exemplary multimode communication device (or system) 500, in accordance with various aspects of the present invention. As discussed previously, a multimode communication system may comprise characteristics of any of a variety of communication systems/devices (e.g., fixed and/or mobile multimode communication devices). The exemplary communication system 500 may, for example and without limitation, be adapted to perform any or all of the functionality discussed previously with regard to the exemplary methods 100-400 discussed previously.

The following discussion may, at times, refer to implementation of particular functionality by one or more modules. Such modules may, for example, comprise various combinations of hardware and/or software. Also, the following discussion will illustrate and discuss various aspects of the present invention in terms of functional modules. Such manner of discussion was chosen for illustrative clarity and not limitation. For example, various functional modules may share various hardware and/or software components. Accordingly, the scope of various aspects of the present invention should not be limited by any particular module implementation or by any arbitrary boundaries between various modules.

The exemplary communication system 500 comprises hardware and/or software to perform communication in multiple communication modes. As an illustration of this, the exemplary communication system 500 comprises a plurality of communication protocol stacks associated with the plurality of communication modes. For example, the first protocol stack 510 may be adapted to perform communication in a first communication mode, the second protocol stack 520 may be adapted to perform communication in a second communication mode, and the N^{th} protocol stack 595 may be adapted to perform communication in an N^{th} communication mode.

As will be illustrated in later figures, the particular make-up of a communication stack may vary in accordance with the respective communication protocol (or mode) in which the communication stack is adapted to communicate. For example, the stack layer labels in Figure 5 are, by no means, to be seen as limiting various aspects of the present invention to characteristics of protocol stacks having layers with such stack layer labels.

Also, as will be illustrated in later figures, various protocol stack layers may share various hardware and/or software components. For example, the graphical separation of the first 510, second 520 and N^{th} 595 protocol stacks in Figure 5 (and other figures) is for illustrative clarity and should not limit the scope of various aspects of the present invention to characteristics of such complete separation.

Figure 6 is a diagram showing a portion of a second exemplary multimode communication device (or system) 600, in accordance with various aspects of the present invention. The exemplary communication system 600 may share any or all characteristics with the exemplary communication system 500 of Figure 5 and may share any or all functional characteristics with the exemplary methods 100-400 discussed previously.

The exemplary device (or system) 600 may comprise a first protocol stack 610 adapted to communicate in a first communication mode and a second protocol stack 620 adapted to communicate in a second communication mode. For example and without limitation, the first protocol stack 610 may be associated with a first communication protocol (e.g., an IEEE 802.11 protocol), and the second protocol stack 620 may be associated with a second communication protocol (e.g., Bluetooth). As explained previously, the scope of various aspects of the present invention should not be limited by characteristics of a particular protocol stack.

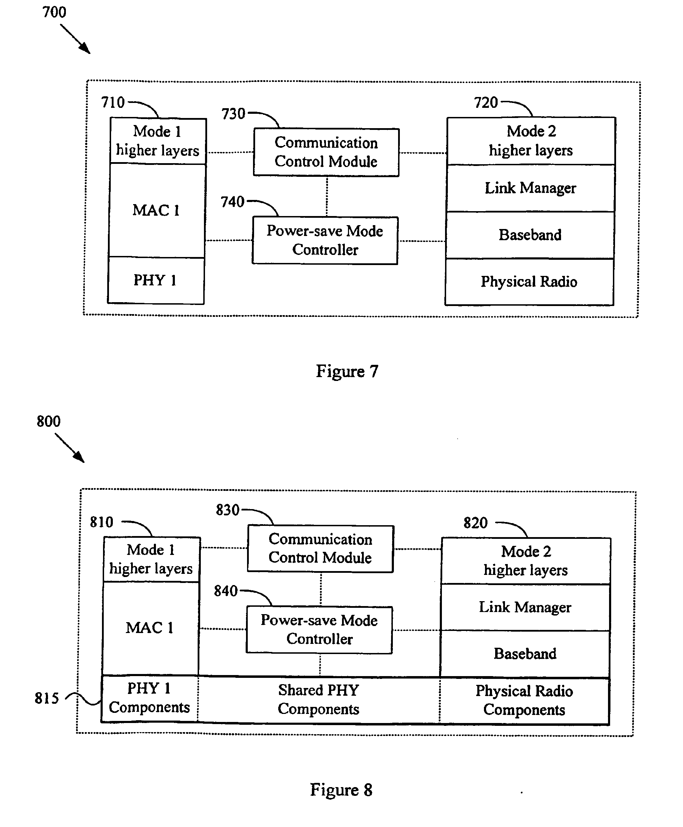

The exemplary device (or system) 600 and the remaining devices (or systems) 700-1000 illustrated in Figures 7-10 are illustrated with two protocol stacks. The two-stack model is shown and discussed for illustrative clarity and not limitation. For example, as illustrated in the exemplary system 500 of Figure 5, various aspects of the present invention apply to communication systems comprising any plural number of protocol stacks.

Figure 7 is a diagram showing a portion of a third exemplary multimode communication device (or system) 700, in accordance with various aspects of the present invention. The exemplary communication device 700 may share any or all characteristics with the exemplary communication devices 500-600 (or systems) illustrated in Figures 5-6 and may share any or all functional characteristics with the exemplary methods 100-400 discussed previously.

The exemplary communication device 700 comprises a first protocol stack 710 adapted to communicate in a first communication mode and a second protocol stack 720 adapted to communicate in a second communication mode. For example and without limitation, the first protocol stack 710 may be associated with a first communication protocol (e.g., an IEEE 802.11 protocol), and the second protocol stack 720 may be associated with a second communication protocol (e.g., Bluetooth). As explained previously, the scope of various aspects of the present invention should not be limited by characteristics of a particular protocol stack.

The first protocol stack 710 may, for example and without limitation, be adapted to perform any or all of the functionality discussed previously with regard to steps 130, 230, 330 and 430 of the exemplary methods 100-400 discussed previously. The second protocol stack 720 may, for example and without limitation, be adapted to perform any or all of the functionality discussed previously with regard to steps 260 and 460 of the exemplary methods 200 and 400 discussed previously.

The protocol stacks (e.g., the first protocol stack 710 and the second protocol stack 720) may utilize various components (i.e., electrical/electronic components) to communicate in respective communication modes. The protocol stacks 710, 720 may, for example, comprise components dedicated to communication in their respective communication modes and/or components that may be utilized for communication in a plurality of communication modes. Such shared components may, for example, be static or dynamic (e.g., programmable or configurable).

As discussed previously (e.g., with regard to the exemplary method 100 of Figure 1), the components of the protocol stacks 710, 720 may comprise characteristics of any of a variety of electrical/electronic components. For example and without limitation, the components may comprise MAC circuitry, PHY circuitry, radio circuitry, frequency generation circuitry, signal generating and/or mixing circuitry, filter circuitry, memory circuitry, signal processing circuitry, amplifier circuitry, analog-to-digital circuitry, digital-to-analog circuitry, power supply circuitry, user interface circuitry, modulation circuitry, etc. The scope of various aspects of the present invention should not be limited by characteristics of particular types of electrical/electronic components.

The exemplary communication device 700 may also comprise a communication control module 730 ("CCM") that may, for example, be adapted to work in conjunction with the first protocol stack 710 and second protocol stack 720 to manage communication in a plurality of communication modes. The CCM 730 may, for example and without limitation, be adapted to perform any or all of the functionality discussed previously with regard to steps 110, 207, 210, 240, 310, 410 and 440 of the exemplary methods 100-400 discussed previously.

The exemplary communication device 700 may additionally comprise a power-save mode controller 740 ("PMC") that may, for example, be adapted to work in conjunction with the CCM 730, the first protocol stack 710 and the second protocol stack 720 to manage power-save operation of the protocol stacks 710, 720. The PMC 740 (e.g., working in conjunction with the first and second protocol stacks 710, 720) may, for example and without limitation, be adapted to perform any or all of the functionality discussed previously with respect to steps 120-125, 209, 220-225, 250-255, 320-325, 420 and 450 of the exemplary methods 100-400 discussed previously.

The CCM 730 and PMC 740 may, for example, be implemented in any of a variety of hardware and/or software configurations. For example, at least a portion of the CCM 730 and/or the PMC 740 may be implemented with a processor executing software instructions and/or with application-specific integrated circuitry. Various functional aspects of the CCM 730, PMC 740 and the first and second protocol stacks 710, 720 will now be illustrated by way of non-limiting example.

In a first non-limiting exemplary scenario, the CCM 730 (or other module) may be adapted to determine to utilize the multimode communication device 700 for communicating in a first communication mode and not in a second communication mode. The CCM 730 may be adapted to perform such a determination in any of a variety of manners. For example and without limitation, the CCM 730 may be adapted to make such a determination based, at least in part, on detected communication conditions. Also for example, the CCM 730 may be adapted to make such a determination based, at least in part, on predetermined communication time allocation (e.g., transmission and/or reception time allocation).

The CCM 730 may, for example, be adapted to determine whether to communicate in the first communication mode in response to a user input, predetermined communication (e.g., transmission) time allocation, detected real-time communication condition(s), etc. In a non-limiting example, the CCM 730 (e.g., in conjunction with other modules) may be adapted to receive or otherwise detect a signal associated with the first communication mode (e.g., utilizing low-power or normal signal detection/analysis circuitry).

Continuing the first non-limiting exemplary scenario, the PMC 740 may, for example, be adapted to (e.g., in response to the CCM 730 determining to utilize the multimode communication device 700 for communicating in the first communication mode and not in the second communication mode) place a first set of components in a normal operational state, where the first set of components is associated with the multimode communication device 700 communicating in the first communication mode. For example, the PMC 740 may be adapted to place a first set of components associated with the first protocol stack 710 in a normal operational state. The placement of electrical/electronic components in a normal operational state was generally discussed previously.

As will be illustrated later, the first set of components might comprise components that are utilized for communication in a plurality of communication modes, one of which is the first communication mode. For example, the first protocol stack 710 and second protocol stack 720 may share various components. In such an exemplary configuration, the PMC 740 may be adapted to place such shared components in a normal operational state (e.g., for utilization in the first communication mode).

Continuing the first non-limiting exemplary scenario, the PMC 740 may, for example, be adapted to (e.g., in response to the CCM 730 determining to utilize the multimode communication device 700 for communicating in the first communication mode and not in the second communication mode) place a second set of components in a power-save state, where the second set of components is associated with communicating in a second communication mode and not associated with communicating in the first communication mode. For example, the PMC 740 may be adapted to place a second set of components associated with the second protocol stack 720 and not with the first protocol stack 710 in a power-save state. The placement of electrical/electronic components in a power-save state was generally discussed previously.

As discussed previously in the discussion of Figure 1, the first and second sets of components might comprise characteristics of any of a variety of electrical/electronic components. For example and without limitation, such components may comprise characteristics of: MAC layer circuitry, processor circuitry, PHY layer circuitry, radio circuitry, optical circuitry, frequency-generating circuitry (e.g., oscillator or phase lock loop circuitry), signal-mixing circuitry (e.g., RF or IF mixer circuitry), filter circuitry (e.g., analog or digital filters), memory circuitry (e.g., volatile or non-volatile memory), signal-processing circuitry (e.g., digital signal processors, microprocessors or microcontrollers), amplifier circuitry (e.g., low-noise amplifiers or power amplifiers), analog-to-digital converter circuitry (e.g., sigma-delta modulator circuitry), digital-to-analog converter circuitry, power supply circuitry, encoder circuitry, decoder circuitry, secure communication circuitry (e.g., secure access or encryption/decryption circuitry) and user interface circuitry (e.g., display circuitry, camera circuitry, audio input or output circuitry, key press circuitry, touchpad circuitry, touch screen circuitry, etc.). In general, the first and second sets of components may comprise characteristics of any of a variety of communication components. Accordingly, the scope of various aspects of the present invention should not be limited by characteristics of any particular type of component or by any particular manner of, or mechanism for, placing such components (or portions thereof) in a normal operational state or power-save state.

Continuing the first non-limiting exemplary scenario, the multimode communication system 700 (e.g., the first protocol stack 710) may be adapted to communicate in the first communication mode utilizing at least the first set of components (e.g., as placed in a normal operational state by the PMC 740). The first protocol stack 710 may, for example, be adapted to communicate in the first communication mode in any of a variety of manners in accordance with the first communication mode. For example and without limitation, the first protocol stack 710 may be adapted to utilize components dedicated to the first protocol stack 710, in addition to other components that are shared between the first protocol stack 710 and the second protocol stack 720.

In a second non-limiting exemplary scenario, the CCM 730 may be adapted to determine whether to communicate (e.g., in any communication mode). The CCM 730 may be adapted to make such a determination in any of a variety of manners. For example, CCM 730 may be adapted to determine whether to communicate in response to a user input, predetermined communication time allocation (e.g., transmission time allocation), detected real-time communication condition(s), etc. In a non-limiting example, the CCM 730 (e.g., in conjunction with other modules) may be adapted to receive or otherwise detect a signal associated with one of a plurality of communication modes in which the multimode communication device 700 is capable of communicating (e.g., utilizing low-power or normal signal detection/analysis circuitry).

If it is determined not to communicate, then the CCM 730 may be adapted to place first and second sets of communication components in a power-save state. For example, the first set of components might be associated with a first communication mode, and the second set of components might be associated with a second communication mode.

If it is determined to communicate, then the CCM 730 may be adapted to determine whether to communicate in a first communication mode. The CCM 730 may be adapted to make such a determination in any of a variety of manners, some of which were discussed previously with regard to the first non-limiting exemplary scenario.

Continuing the second non-limiting exemplary scenario, if the CCM 730 determines to communicate in the first communication mode, then the PMC 740 may be adapted to place a first set of components in a normal operational state, where the first set of components is associated with the multimode communication device 700 communicating in the first communication mode. For example, the first set of components may be associated with the first protocol stack 710.

The PMC 740 may also be adapted to place a second set of components in a power-save state, where the second set of components is associated with communicating in a second communication mode and not associated with communicating in the first communication mode. For example, the second set of components may be associated with the second protocol stack 720 and not with the first protocol stack 710.

The first protocol stack 710 may then be adapted to communicate in the first communication mode utilizing at least the first set of components (e.g., as placed in a normal operational state by the PMC 740).

Continuing the second non-limiting exemplary scenario, if the CCM 730 determines not to communicate in the first communication mode, or if communication in the first communication mode has been completed, the CCM 730 may be adapted to determine whether to communicate in a second communication mode. The CCM 730 may be adapted to make such a determination in any of a variety of manners.

If the CCM 730 determines to communicate in the second communication mode, then the PMC 740 may be adapted to place a second set of components in a normal operational state (e.g., the second set of components associated with the multimode communication device communicating in the second communication mode). The PMC 740 may also be adapted to place at least a portion of the first set of components in a power-save state (e.g., at least a portion of the first set of components associated with communicating in the first communication mode and not associated with communicating in the second communication mode).

The second protocol stack 720 may then be adapted to communicate in the second communication mode utilizing at least the second set of components (e.g., as placed in a normal operational state by the PMC 740).

As mentioned previously in the discussion of the first non-limiting exemplary scenario, the CCM 730 may be adapted to determine to communicate in the first communication mode (and, by analogy, the second communication mode) based, at least in part, on detected communication conditions. A third non-limiting exemplary scenario will now be presented as a non-limiting example of making such a determination.

In a third non-limiting exemplary scenario, the CCM 730 may be adapted to determine to communicate in a first communication mode and not in a second communication mode. For example, the CCM 730 may be adapted to detect a communication condition (e.g., detect a real-time communication condition in real-time).

As discussed previously, a communication condition may be generally considered to be an event or communication environmental condition encountered during operation of the multimode communication device. For example and without limitation, a communication condition may comprise characteristics of a user input (e.g., a user initiation of an outgoing communication or response to an incoming communication), a signal received from another device (e.g., a beacon signal, response to a beacon signal, a broadcast signal, unicast signal, multicast signal, etc.), characteristics of the general communication environment (e.g., noise conditions, effective data rate, quality of service, cost, etc.) or communication device (or system) limitations (e.g., power supply and/or utilization, power output capability, communication mode capability, etc.).

Continuing the third non-limiting exemplary scenario, the CCM 730 may then, for example, be adapted to determine to communicate in a first communication mode and not in a second communication mode based, at least in part, on the detected communication condition(s). The CCM 730 may be adapted to make such a determination in any of a variety of manners. For example and without limitation, the CCM 730 may be adapted to analyze one or more detected communication conditions to determine whether the first communication mode is required for a particular communication. Also for example, the CCM 730 may be adapted to analyze one or more detected communication conditions to determine whether the first communication mode is preferable to the second communication mode for a particular communication.

Continuing the third non-limiting exemplary scenario, the PMC 740 may be adapted to (e.g., in response to the CCM 730 determining to utilize the multimode communication device for communicating in the first communication mode and not in the second communication mode) place a first set of components in a normal operational state, where the first set of components is associated with the multimode communication device 100 communicating in the first communication mode. The first set of components may, for example, be associated with the first protocol stack 710.

The PMC 740 may also, for example, be adapted to place a second set of components in a power-save state, where the second set of components is associated with communicating in a second communication mode (e.g., associated with the second protocol stack 720) and not associated with communicating in the first communication mode (e.g., not associated with the first protocol stack 710).

The first protocol stack 710 may then be adapted to communicate in the first communication mode utilizing at least the first set of components (e.g., as placed in a normal operational state by the PMC 740).

As mentioned previously in the first non-limiting exemplary scenario, the CCM 730 may be adapted to determinate to communicate in the first communication mode (and, by analogy, the second communication mode) based, at least in part, on a predetermined communication time allocation (e.g., transmission and/or reception time allocation). A fourth non-limiting exemplary scenario will now be presented as a non-limiting example of making such a determination

In a fourth non-limiting exemplary scenario, the CCM 730 may be adapted to determine to utilize the multimode communication device 700 for communicating in a first communication mode and not in a second communication mode based, at least in part, on a communication time schedule (e.g., a transmission time schedule). Such a communication time schedule may comprise any of a variety of time schedule characteristics. For example and without limitation, the communication time schedule may comprise information detailing communication time windows allocated between a plurality of communication modes. The communication time schedule may, for example, be determined prior to beginning communication in the first communication mode and/or the second communication mode. The communication time schedule may also, for example, be determined or modified in response to real-time communication conditions.

The PMC 740 may, for example, be adapted to (e.g., in response to the CCM 730 determining to utilize the multimode communication device 700 for communicating in the first communication mode and not in the second communication mode) place a first set of components in a normal operational state, where the first set of components is associated with the multimode communication device 700 communicating in the first communication mode. For example, the first set of components may be associated with the first protocol stack 710. The PMC 740 may also, for example, be adapted to place a second set of components in a power-save state, where the second set of components is associated with communicating in a second communication mode and not associated with communicating in the first communication mode. For example, the second set of components might be associated with the second protocol stack 720 and not associated with the first protocol stack 710. Further, the PMC 740 may be adapted to place a third set of components in a normal operational state, where the third set of components is associated with communicating in at least the first communication mode and the second communication mode. For example, the third set of components might be associated with the first protocol stack 710 and the second protocol stack 720.

The first protocol stack 710 may then be adapted to communicate in the first communication mode utilizing at least the first and third sets of components (e.g., as placed in a normal operational state by the PMC 740).

Continuing the fourth non-limiting exemplary scenario, the CCM 730 may be adapted to (e.g., while the first protocol stack 710 is communicating in the first communication mode) determine to utilize the multimode communication device 700 for communicating in the second communication mode and not in the first communication mode.

The PMC 740 may be adapted to (e.g., in response to the CCM 730 determining to utilize the multimode communication device 700 for communicating in the second communication mode and not in the first communication mode) place a second set of components in a normal operational state, where the second set of components is associated with the multimode communication device 700 communicating in the second communication mode. For example, the second set of components might be associated with the second protocol stack 720. The PMC 740 may also, for example, be adapted to place the first set of components (e.g., utilized previously by the first protocol stack 710) in a power-save state, where the first set of components is associated with communicating in the first communication mode and not associated with communicating in the second communication mode. For example, the first set of components might be associated with the first protocol stack 710 and not associated with the second protocol stack 720. The PMC 740 may also, for example, be adapted to place a third set of components in a normal operational state, where the third set of components is associated with communicating in at least the first communication mode and the second communication mode. For example, the third set of components might be associated with the first protocol stack 710 and the second protocol stack 720.

The second protocol stack 720 may then, for example, be adapted to communicate in the second communication mode utilizing at least the second and third sets of components (e.g., as placed in a normal operational state by the PMC 740).

The exemplary scenarios above were presented to provide non-limiting examples of various aspects of the present invention. Accordingly, the scope of various aspects of the present invention should not be limited by particular characteristics of the exemplary scenarios.

As mentioned previously, communication through the first and second protocol stacks 710, 720 may be performed in a plurality of communication modes utilizing shared PHY layer components (e.g., shared radio or various shared radio components). The exemplary communication system 800 of Figure 8 is presented to provide a non-limiting exemplary illustration of utilizing such shared PHY layer components.

Figure 8 is a diagram showing a portion of a fourth exemplary multimode communication device (or system) 800, in accordance with various aspects of the present invention. The exemplary communication device 800 may, for example and without limitation, share any or all characteristics with the exemplary communication devices (or systems) 500-700 illustrated in Figures 5-7 and discussed previously and/or any or all functional characteristics of the exemplary methods 100-400 discussed previously.

The exemplary communication device 800 comprises a PHY layer 815, which comprises PHY 1 components utilized for communicating in the first communication mode by the first protocol stack 810 and Physical Radio Components utilized for communicating in the second communication mode by the second protocol stack 820. The PHY layer 815 further comprises Shared PHY Components that are utilized by the first protocol stack 810 for communicating in the first communication mode and by the second protocol stack 820 for communicating in the second communication mode.

In a non-limiting exemplary scenario, upon a determination by the CCM 830 to not communicate in either the first or second communication modes, the PMC 840 may be adapted to place all of the PHY layer 815 components in a power-save state. Also for example, upon a determination by the CCM 830 to communicate in the first communication mode and not the second communication mode, the PMC 840 may be adapted to place the PHY 1 Components and the Shared PHY Components in a normal operational state and place the Physical Radio Components in a power-save state. Additionally for example, upon a determination by the CCM 830 to communicate in the second communication mode and not the first communication mode, the PMC 840 may be adapted to place the PHY 1 Components in a power-save state and place the Physical Radio Components and the Shared PHY Components in a normal operational state. Further for example, upon a determination by the CCM 830 to communicate in both the first and second communication modes concurrently, the PMC 840 may be adapted to place all of the PHY layer 815 components in a normal operational state.

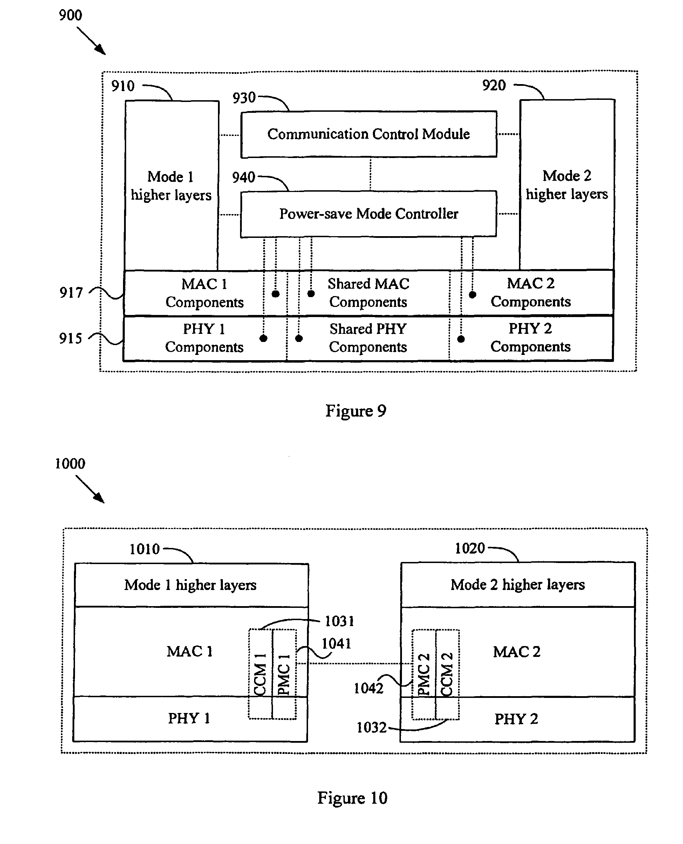

As mentioned previously, communication through first and second protocol stacks may be performed in a plurality of communication modes utilizing at least shared MAC layer components (e.g., shared processing components). The exemplary communication system 900 of Figure 9 is presented to provide a non-limiting exemplary illustration of utilizing such shared MAC layer components.

Figure 9 is a diagram showing a portion of a fifth exemplary multimode communication device (or system) 900, in accordance with various aspects of the present invention. The exemplary communication device 900 may, for example and without limitation, share any or all characteristics with the exemplary communication devices (or systems) 500-800 illustrated in Figures 5-8 and discussed previously and/or any or all functional characteristics of the exemplary methods 100-400 discussed previously.

The exemplary system 900 comprises a PHY layer 915, which comprises PHY 1 components utilized for communicating in the first communication mode by the first protocol stack 910 and PHY 2 components utilized for communicating in the second communication mode by the second protocol stack 920. The PHY layer 915 further comprises Shared PHY Components that are utilized by the first protocol stack 910 for communicating in the first communication mode and by the second protocol stack 920 for communicating in the second communication mode.

The exemplary system 900 also comprises a MAC layer 917, which comprises MAC 1 Components utilized for communicating in the first communication mode by the first protocol stack 910 and MAC 2 Components utilized for communicating in the second communication mode by the second protocol stack 920. The MAC layer 917 further comprises Shared MAC Components that are utilized by the first protocol stack 910 for communicating in the first communication mode and by the second protocol stack 920 for communicating in the second communication mode.

In a non-limiting exemplary scenario, upon a determination by the CCM 930 to not communicate in either the first or second communication modes, the PMC 940 may be adapted to place all of the PHY layer 815 components and MAC layer 817 components in a power-save state. Also for example, upon a determination by the CCM 930 to communicate in the first communication mode and not the second communication mode, the PMC 940 may be adapted to place the PHY 1 Components, the Shared PHY Components, the MAC 1 Components and the Shared MAC Components in a normal operational state and place the PHY 2 Components and MAC 2 Components in a power-save state. Additionally for example, upon a determination by the CCM 930 to communicate in the second communication mode and not the first communication mode, the PMC 940 may be adapted to place the PHY 1 Components and MAC 1 Components in a power-save state and place the PHY 2 Components, the Shared PHY Components, the MAC 2 Components and the Shared MAC Components in a normal operational state. Further for example, upon a determination by the CCM 930 to communicate in both the first and second communication modes concurrently, the PMC 940 may be adapted to place all of the PHY layer 915 components and the MAC layer 917 components in a normal operational state.

As mentioned previously, various functional modules are illustrated and discussed as independent entities for illustrative clarity and not for limitation. For example, the CCMs 730, 830, 930 and PMCs 740, 840, 940 discussed previously may be implemented as part of any one or more protocol stacks. Figure 10 provides non-limiting examples of various implementation options. Figure 10 is a diagram showing a portion of a sixth exemplary multimode communication device (or system) 1000, in accordance with various aspects of the present invention.

The exemplary communication device 1000 may, for example, comprise a first protocol stack 1010 and a second protocol stack 1020. In a first non-limiting exemplary configuration, the CCM and/or PMC may be implemented exclusively in the first protocol stack 1010 (e.g., as illustrated by CCM 1 1031 and/or PMC 1 1041). In a second non-limiting exemplary configuration, the CCM and/or PMC may be implemented exclusively in the second protocol stack 1020 (e.g., as illustrated by CCM 2 1032 and/or PMC 2 1042). In a third non-limiting exemplary configuration, the CCM and/or PMC may be implemented in a distributed manner in the first and second protocol stacks 1010, 1020 (e.g., as illustrated by CCM 1 1031 in combination with CCM 2 1032 and/or PMC 1 1041 in combination with PMC 2 1042). In such a distributed configuration the distributed CCM and/or PMC modules may comprise characteristics of a master and slave configuration or distributed peer-to-peer configuration.

The exemplary communication devices (or systems) 500-1000 illustrated in Figures 5-10 were presented to provide non-limiting examples of various aspects of the present invention. Accordingly, the scope of various aspects of the present invention should not be limited by particular characteristics of the exemplary communication devices 500-1000.

In summary, various aspects of the present invention provide a system and method providing power-save operation in a multimode communication device. While the invention has been described with reference to certain aspects and embodiments, it will be understood by those skilled in the art that various changes may be made and equivalents may be substituted without departing from the scope of the invention. In addition, many modifications may be made to adapt a particular situation or material to the teachings of the invention without departing from its scope. Therefore, it is intended that the invention not be limited to the particular embodiment disclosed, but that the invention will include all embodiments falling within the scope of the appended claims.

## Claims

1. A method for operating a multimode communication device including a first protocol stack and a second protocol stack that utilize various components to communicate in respective communication modes, the method comprising:
determining (110) to communicate in a first communication mode and not in a second communication mode by at least one communication control module, CCM; and
in response to determining to communicate in the first communication mode and not in the second communication mode:
placing (120) a first set of components associated with the first protocol stack in a normal operational state by at least one power-save mode controller, PMC, where the first set of components is associated with communicating in the first communication mode;
placing (125) a second set of components associated with the second protocol stack in a power-save state by the at least one PMC, where the second set of components is associated with communicating in the second communication mode and not associated with communicating in the first communication mode; and
communicating (130) in the first communication mode utilizing at least the first set of components; **characterised by**
the at least one CCM and/or the at least one PMC are implemented as part of the first protocol stack and the second protocol stack in a distributed manner in the first protocol stack comprising the first set of components and the second protocol stack comprising the second set of components;
wherein the distributed CCM and/or PMC comprise characteristics of a master and slave configuration or distributed peer-to-peer configuration.

2. The method of claim 1, further comprising:
while communicating in the first communication mode, determining (240) to communicate in the second communication mode and not in the first communication mode; and
in response to determining to communicate in the second communication mode and not in the first communication mode:
placing (250) the second set of components in a normal operational state;
placing (255) at least a portion of the first set of components in a power-save state; and
communicating (260) in the second communication mode utilizing at least the second set of components.

3. The method of claim 1, further comprising, in response to determining to communicate in the first communication mode and not in the second communication mode, placing (420) a third set of components in a normal operational state, where the third set of components is associated with communicating in at least the first communication mode and the second communication mode.

4. The method of claim 1, wherein determining to communicate in a first communication mode and not in a second communication mode comprises:
receiving a user input; and
determining to communicate in the first communication mode and not in the second communication mode based, at least in part, on the user input.

5. The method of claim 1, wherein determining to communicate in a first communication mode and not in a second communication mode comprises:
receiving a signal from another communication system; and
determining to communicate in the first communication mode and not in the second communication mode based, at least in part, on the received signal.

6. The method of claim 1, wherein determining to communicate in a first communication mode and not in a second communication mode comprises determining to communicate in a first communication mode and not in a second communication mode based, at least in part, on a transmission time schedule.

7. A multimode communication device including a first protocol stack (1010) and a second protocol stack (1020) that utilize various components to communicate in respective communication modes comprising:
a first set of components associated with the first protocol stack (1010) adapted for communication in at least a first communication mode and not in a second communication mode;
a second set of components associated with the second protocol stack (1020) adapted for communication in at least the second communication mode and not in the first communication mode; and
at least one communication control module (1031, 1032), CCM, adapted to:
determine to communicate in the first communication mode and not in the second communication mode; and
at least one power-save mode controller (1041, 1042), PMC, which - in response to determining to communicate in the first communication mode and
not in the second communication mode - is adapted to:
place the first set of components in a normal operational state;
place the second set of components in a power-save state; and
communicate in the first communication mode utilizing at least the first set of components; **characterised by**
the at least one CCM (1031, 1032) and/or the at least one PMC (1041, 1042) are implemented as part of the first protocol stack (1010) and the second protocol stack (1020) in a distributed manner in the first protocol stack (1010) comprising the first set of components and the second protocol stack (1020) comprising the second set of components;
wherein the distributed CCM (1031, 1032) and/or PMC (1041, 1042) comprise characteristics of a master and slave configuration or distributed peer-to-peer configuration.

8. The multimode communication device of claim 7, wherein the at least one CCM (1031, 1032) is further adapted to:
while communicating in the first communication mode, determine to communicate in the second communication mode and not in the first communication mode; and
wherein the at least one PMC (1041, 1042) - in response to determining to communicate in the second communication mode and not in the first communication mode - is adapted to:
place the second set of components in a normal operational state;
place at least a portion of the first set of components in a power-save state; and
communicate in the second communication mode utilizing at least the second set of components.

9. The multimode communication device of claim 7, further comprising a third set of components adapted for communication in at least the first communication mode and the second communication mode, and wherein the at least one PMC (1041, 1042) is further adapted to, in response to the at least one CCM (1031, 1032) determining to communicate in the first communication mode and not in the second communication mode, place the third set of components in a normal operational state.

10. The multimode communication device of claim 7, wherein the at least one CCM (1031, 1032) is adapted to determine to communicate in a first communication mode and not in a second communication mode based, at least in part, on a transmission time schedule.

## Patentansprüche

1. Verfahren zum Betreiben eines Multimode-Kommunikationsgeräts mit einem ersten Protokollstapel und einem zweiten Protokollstapel, die verschiedene Komponenten verwenden, um in jeweiligen Kommunikationsmodi zu kommunizieren, wobei das Verfahren umfasst:
Bestimmen (110), in einem ersten Kommunikationsmodus und nicht in einem zweiten Kommunikationsmodus zu kommunizieren, durch wenigstens ein Kommunikationssteuerungsmodul; und
im Ansprechen auf das Bestimmen, im ersten Kommunikationsmodus und nicht im zweiten Kommunikationsmodus zu kommunizieren:
Versetzen (120) eines ersten Satzes von Komponenten, die mit dem ersten Protokollstapel assoziiert sind, in einen normalen Betriebszustand durch wenigstens einen Energiesparmodus-Controller, wobei der erste Satz von Komponenten mit dem Kommunizieren im ersten Kommunikationsmodus assoziiert ist;
Versetzen (125) eines zweiten Satzes von Komponenten, die mit dem zweiten Protokollstapel assoziiert sind, in einen Energiesparzustand durch den wenigstens einen Energiesparmodus-Controller, wobei der zweite Satz von Komponenten mit dem Kommunizieren im zweiten Kommunikationsmodus und nicht mit dem Kommunizieren im ersten Kommunikationsmodus assoziiert ist; und
Kommunizieren (130) im ersten Kommunikationsmodus mittels wenigstens des ersten Satzes von Komponenten;
**dadurch gekennzeichnet, dass**
das wenigstens eine Kommunikationssteuerungsmodul und/oder der wenigstens eine Energiesparmodus-Controller als Teil des ersten Protokollstapels und des zweiten Protokollstapels auf dezentrale Art und Weise in dem ersten Protokollstapel, der den ersten Satz von Komponenten aufweist, und dem zweiten Protokollstapel, der den zweiten Satz von Komponenten aufweist, implementiert sind;
wobei das dezentrale Kommunikationssteuerungsmodul und/oder der dezentrale Energiesparmodus-Controller Eigenschaften einer Master- und Slave-Konfiguration oder einer dezentralen Peer-to-Peer-Konfiguration aufweisen.

2. Verfahren nach Anspruch 1, das des Weiteren umfasst:
während des Kommunizierens im ersten Kommunikationsmodus, Bestimmen (240), im zweiten Kommunikationsmodus und nicht im ersten Kommunikationsmodus zu kommunizieren; und
im Ansprechen auf das Bestimmen, im zweiten Kommunikationsmodus und nicht im ersten Kommunikationsmodus zu kommunizieren:
Versetzen (250) des zweiten Satzes von Komponenten in einen normalen Betriebszustand;
Versetzen (255) wenigstens eines Teils des ersten Satzes von Komponenten in einen Energiesparzustand; und
Kommunizieren (260) im zweiten Kommunikationsmodus mittels wenigstens des zweiten Satzes von Komponenten.

3. Verfahren nach Anspruch 1, das des Weiteren im Ansprechen auf das Bestimmen, im ersten Kommunikationsmodus und nicht im zweiten Kommunikationsmodus zu kommunizieren, das Versetzen (420) eines dritten Satzes von Komponenten in einen normalen Betriebszustand umfasst, wobei der dritte Satz von Komponenten mit dem Kommunizieren in wenigstens dem ersten Kommunikationsmodus und dem zweiten Kommunikationsmodus assoziiert ist.

4. Verfahren nach Anspruch 1, wobei das Bestimmen, in einem ersten Kommunikationsmodus und nicht in einem zweiten Kommunikationsmodus zu kommunizieren umfasst:
Empfangen einer Benutzereingabe; und
Bestimmen, im ersten Kommunikationsmodus und nicht im zweiten Kommunikationsmodus zu kommunizieren, basierend wenigstens teilweise auf der Benutzereingabe.

5. Verfahren nach Anspruch 1, wobei das Bestimmen, in einem ersten Kommunikationsmodus und nicht in einem zweiten Kommunikationsmodus zu kommunizieren, umfasst:
Empfangen eines Signals von einem anderen Kommunikationssystem; und
Bestimmen, im ersten Kommunikationsmodus und nicht im zweiten Kommunikationsmodus zu kommunizieren, basierend wenigstens teilweise auf dem empfangenen Signal.

6. Verfahren nach Anspruch 1, wobei das wobei das Bestimmen, im einem ersten Kommunikationsmodus und nicht in einem zweiten Kommunikationsmodus zu kommunizieren, das Bestimmen umfasst, in einem ersten Kommunikationsmodus und nicht in einem zweiten Kommunikationsmodus zu kommunizieren, basierend wenigstens teilweise auf einem Sendezeitplan.

7. Multimode-Kommunikationsgerät mit einem ersten Protokollstapel (1010) und einem zweiten Protokollstapel (1020), die verschiedene Komponenten verwenden, um in jeweiligen Kommunikationsmodi zu kommunizieren, wobei das Gerät aufweist:
einen ersten Satz von Komponenten, die mit dem ersten Protokoll stapel (1010) assoziiert und zur Kommunikation in wenigstens einem ersten Kommunikationsmodus und nicht in einem zweiten Kommunikationsmodus ausgelegt sind;
einen zweiten Satz von Komponenten, die mit dem zweiten Protokollstapel (1020) assoziiert und zur Kommunikation in wenigstens dem zweiten Kommunikationsmodus und nicht im ersten Kommunikationsmodus ausgelegt sind; und
wenigstens ein Kommunikationssteuerungsmodul (1031, 1032), das ausgelegt ist zum:
Bestimmen, im ersten Kommunikationsmodus und nicht im zweiten Kommunikationsmodus zu kommunizieren; und
wenigstens einen Energiesparmodus-Controller (1041, 1042), der
- im Ansprechen auf das Bestimmen, im ersten Kommunikationsmodus und nicht im zweiten Kommunikationsmodus zu kommunizieren - ausgelegt ist zum:
Versetzen des ersten Satzes von Komponenten in einen normalen Betriebszustand;
Versetzen des zweiten Satzes von Komponenten in einen Energiesparzustand; und
Kommunizieren im ersten Kommunikationsmodus mittels wenigstens des ersten Satzes von Komponenten;
**dadurch gekennzeichnet, dass**
das wenigstens eine Kommunikationssteuerungsmodul (1031, 1032) und/oder der wenigstens eine Energiesparmodus-Controller (1041, 1042) als Teil des ersten Protokollstapels (1010) und des zweiten Protokollstapels (1020) auf dezentrale Art und Weise in dem ersten Protokollstapel (1010), der den ersten Satz von Komponenten aufweist, und dem zweiten Protokollstapel (1020), der den zweiten Satz von Komponenten aufweist, implementiert sind;
wobei das dezentrale Kommunikationssteuerungsmodul (1031, 1032) und/oder der dezentrale Energiesparmodus-Controller (1041, 1042) Eigenschaften einer Master- und Slave-Konfiguration oder einer dezentralen Peer-to-Peer-Konfiguration aufweisen.

8. Multimode-Kommunikationsgerät nach Anspruch 7, wobei das wenigstens eine Kommunikationssteuerungsmodul (1031, 1032) des Weiteren ausgelegt ist zum:
während des Kommunizierens im ersten Kommunikationsmodus, Bestimmen, im zweiten Kommunikationsmodus und nicht im ersten Kommunikationsmodus zu kommunizieren; und
wobei der wenigstens eine Energiesparmodus-Controller (1041, 1042) - im Ansprechen auf das Bestimmen, im zweiten Kommunikationsmodus und nicht im ersten Kommunikationsmodus zu kommunizieren - ausgelegt ist zum:
Versetzen des zweiten Satzes von Komponenten in einen normalen Betriebszustand;
Versetzen wenigstens eines Teils des ersten Satzes von Komponenten in einen Energiesparzustand; und
Kommunizieren im zweiten Kommunikationsmodus mittels wenigstens des zweiten Satzes von Komponenten.

9. Multimode-Kommunikationsgerät nach Anspruch 7, das des Weiteren einen dritten Satz von Komponenten aufweist, die zur Kommunikation in wenigstens dem ersten Kommunikationsmodus und dem zweiten Kommunikationsmodus ausgelegt sind, und wobei der wenigstens eine Energiesparmodus-Controller (1041, 1042) des Weiteren ausgelegt ist, um im Ansprechen darauf, dass das wenigstens eine Kommunikationssteuerungsmodul (1031, 1032) bestimmt, im ersten Kommunikationsmodus und nicht im zweiten Kommunikationsmodus zu kommunizieren, den dritten Satz von Komponenten in einen normalen Betriebszustand zu versetzen.

10. Multimode-Kommunikationsgerät nach Anspruch 7, wobei das wenigstens eine Kommunikationssteuerungsmodul (1031, 1032) ausgelegt ist, um zu bestimmen, in einem ersten Kommunikationsmodus und nicht in einem zweiten Kommunikationsmodus zu kommunizieren, basierend wenigstens teilweise auf einem Sendezeitplan.

## Revendications

1. Procédé de fonctionnement d'un dispositif de communication multimodal incluant une première pile de protocoles et une deuxième pile de protocoles qui utilisent divers composants pour communiquer dans des modes de communication respectifs, le procédé comprenant :
la détermination (110) de communiquer dans un premier mode de communication et non dans un deuxième mode de communication par au moins un module de contrôle de communication, CCM ; et
en réponse à la détermination de communiquer dans le premier mode de communication et non dans le deuxième mode de communication :
la mise (120) d'un premier ensemble de composants associés avec la première pile de protocoles dans un état opérationnel normal par au moins un contrôleur de mode d'économie d'énergie, PMC, où le premier ensemble de composants est associé avec une communication dans le premier mode de communication ;
la mise (125) d'un deuxième ensemble de composants associés avec la deuxième pile de protocoles dans un état d'économie d'énergie par l'au moins un PMC, où le deuxième ensemble de composants est associé avec une communication dans le deuxième mode de communication et non associé avec une communication dans le premier mode de communication ; et
la communication (130) dans le premier mode de communication en utilisant au moins le premier ensemble de composants ;
**caractérisé en ce que**
l'au moins un CCM et/ou l'au moins un PMC sont/est mis en oeuvre comme une partie de la première pile de protocoles et de la deuxième pile de protocoles d'une manière distribuée dans la première pile de protocoles comprenant le premier ensemble de composants et la deuxième pile de protocoles comprenant le deuxième ensemble de composants ;
dans lequel le CCM et/ou le PMC distribué(s) comprennent/comprend des caractéristiques d'une configuration maître et esclave ou d'une configuration distribuée de pair à pair.

2. Procédé selon la revendication 1, comprenant en outre :
tout en communiquant dans le premier mode de communication, la détermination (240) de communiquer dans le deuxième mode de communication et non dans le premier mode de communication ; et
en réponse à la détermination de communiquer dans le deuxième mode de communication et non dans le premier mode de communication :
la mise (250) du deuxième ensemble de composants dans un état opérationnel normal ;
la mise (255) d'au moins une partie du premier ensemble de composants dans un état d'économie d'énergie ; et
la communication (260) dans le deuxième mode de communication en utilisant au moins le deuxième ensemble de composants.

3. Procédé selon la revendication 1, comprenant en outre, en réponse à la détermination de communiquer dans le premier mode de communication et non dans le deuxième mode de communication, la mise (420) d'un troisième ensemble de composants dans un état opérationnel normal, où le troisième ensemble de composants est associé avec une communication dans au moins le premier mode de communication et le deuxième mode de communication.

4. Procédé selon la revendication 1, dans lequel la détermination de communiquer dans un premier mode de communication et non dans un deuxième mode de communication comprend :
la réception d'une entrée d'utilisateur ; et
la détermination de communiquer dans le premier mode de communication et non dans le deuxième mode de communication sur la base, au moins en partie, de l'entrée d'utilisateur.

5. Procédé selon la revendication 1, dans lequel la détermination de communiquer dans un premier mode de communication et non dans un deuxième mode de communication comprend :
la réception d'un signal d'un autre système de communication ; et
la détermination de communiquer dans le premier mode de communication et non dans le deuxième mode de communication sur la base, au moins en partie, du signal reçu.

6. Procédé selon la revendication 1, dans lequel la détermination de communiquer dans un premier mode de communication et non dans un deuxième mode de communication comprend la détermination de communiquer dans un premier mode de communication et non dans un deuxième mode de communication sur la base, au moins en partie, d'un programme de temps de transmission.

7. Dispositif de communication multimodal incluant une première pile de protocoles (1010) et une deuxième pile de protocoles (1020) qui utilisent divers composants pour communiquer dans des modes de communication respectifs comprenant :
un premier ensemble de composants associés avec la première pile de protocoles (1010) adaptés à une communication dans au moins un premier mode de communication et non dans un deuxième mode de communication ;
un deuxième ensemble de composants associés avec la deuxième pile de protocoles (1020) adaptés à une communication dans au moins le deuxième mode de communication et non dans le premier mode de communication ; et
au moins un module de contrôle de communication (1031, 1032), CCM, adapté à :
déterminer de communiquer dans le premier mode de communication et non dans le deuxième mode de communication ; et
au moins un contrôleur de mode d'économie d'énergie (1041, 1042), PMC, qui - en réponse à la détermination de communiquer dans le premier mode de communication et non dans le deuxième mode de communication - est adapté à :
placer le premier ensemble de composants dans un état opérationnel normal ;
placer le deuxième ensemble de composants dans un état d'économie d'énergie ; et
communiquer dans le premier mode de communication en utilisant au moins le premier ensemble de composants ;
**caractérisé en ce que**
l'au moins un CCM (1031, 1032) et/ou l'au moins un PMC (1041, 1042) sont/est mis en oeuvre comme une partie de la première pile de protocoles (1010) et de la deuxième pile de protocoles (1020) d'une manière distribuée dans la première pile de protocoles (1010) comprenant le premier ensemble de composants et la deuxième pile de protocoles (1020) comprenant le deuxième ensemble de composants ;
dans lequel le CCM (1031, 1032) et/ou le PMC (1041, 1042) distribué(s) comprennent/comprend des caractéristiques d'une configuration maître et esclave ou d'une configuration distribuée de pair à pair.

8. Dispositif de communication multimodal selon la revendication 7, dans lequel l'au moins un CCM (1031, 1032) est en outre adapté à :
tout en communiquant dans le premier mode de communication, déterminer de communiquer dans le deuxième mode de communication et non dans le premier mode de communication ; et
dans lequel l'au moins un PMC (1041, 1042) - en réponse à la détermination de communiquer dans le deuxième mode de communication et non dans le premier mode de communication - est adapté à :
placer le deuxième ensemble de composants dans un état opérationnel normal ;
placer au moins une partie du premier ensemble de composants dans un état d'économie d'énergie ; et
communiquer dans le deuxième mode de communication en utilisant au moins le deuxième ensemble de composants.

9. Dispositif de communication multimodal selon la revendication 7, comprenant en outre un troisième ensemble de composants adaptés à une communication dans au moins le premier mode de communication et le deuxième mode de communication, et dans lequel l'au moins un PMC (1041, 1042) est en outre adapté à, en réponse à l'au moins un CCM (1031, 1032) déterminant de communiquer dans le premier mode de communication et non dans le deuxième mode de communication, placer le troisième ensemble de composants dans un état opérationnel normal.

10. Dispositif de communication multimodal selon la revendication 7, dans lequel l'au moins un CCM (1031, 1032) est adapté à déterminer de communiquer dans un premier mode de communication et non dans un deuxième mode de communication sur la base, au moins en partie, d'un programme de temps de transmission.
